# EUROPÄISCHE PATENTANMELDUNG

(11) **EP 4 586 418 A1**
(43) Veröffentlichungstag der Anmeldung: **16.07.2025**
(21) Anmeldenummer: 24151682.2
(22) Anmeldetag: 12.01.2024
(51) Int. Cl.: H01R 13/6591, H01R 13/6592, H02G 3/00, H02K 5/00

(54) **SCHIRMANSCHLUSSELEMENT**

(71) Anmelder: KEB Automation KG, 32683 Barntrup (DE)
(72) Erfinder: Hagemann, Andreas, 32756 Detmold (DE)
(74) Vertreter: Brinkmann & Partner

(57) **Zusammenfassung**

Die Erfindung betrifft ein Schirmanschlusselement für die Ausbildung einer elektrischen Verbindung zwischen einem Schirmgeflecht eines geschirmten elektrischen Kabels und einem geerdeten Anschlusskontakt einer elektrischen Maschine oder eines Umrichters, das zweiteilig ausgebildet ist und ein kabelseitiges Ringelement (2) einerseits sowie ein anschlusskontaktseitiges Anschlusselement (3) andererseits aufweist, wobei das Ringelement (2) im Durchmesser verstellbar ausgebildet und dazu eingerichtet ist, das geschirmte elektrische Kabel (4) im endmontierten Zustand unter Ausbildung einer quer zur Flächennormalen der vom Ringelement (2) umschlossenen Ringelementfläche ausgerichteten Klemmkraft zu umgreifen, wobei das Anschlusselement (3) ein Band (5) aus Schirmgeflecht ist, das zur Anordnung am Ringelement (2) einendseitig eine Schlaufe (6) und zur Anordnung am Anschlusskontakt (17) anderendseitig eine Durchgangsbohrung (7) bereitstellt, wobei die Schlaufe (6) das Ringelement (2) umgreift und dazu eingerichtet ist, im endmontierten Zustand mit einem Schlaufenabschnitt (10) außenseitig des kabelseitigen Schirmgeflechts zwischen elektrischem Kabel (4) und Ringelement (2) am kabelseitigen Schirmgeflecht anzuliegen.

## Beschreibung

Die Erfindung betrifft ein Schirmanschlusselement für die Ausbildung einer elektrischen Verbindung zwischen einem Schirmgeflecht eines geschirmten elektrischen Kabels und einem geerdeten Anschlusskontakt einer elektrischen Maschine oder eines Umrichters.

Schirmanschlusselemente der eingangs genannten Art sind aus dem Stand der Technik an sich gut bekannt, weshalb es auch eines gesonderten druckschriftlichen Nachweises an dieser Stelle dem Grunde nach nicht bedarf. Es sei deshalb auch nur beispielhaft auf die DE 10 2010 009 204 B4, die DE 10 2017 127 288 A1, die DE 85 10 188 U und die DE 10 2016 205 423 A1 verwiesen.

Ein elektrisches Kabel, insbesondere ein elektrisches Kabel zur elektrischen Verbindung einer elektrischen Maschine mit einem Umrichter, beispielsweise einem Frequenzumrichter, verfügt in an sich bekannter Weise über mehrere elektrische Leiter, die jeweils isoliert ausgebildet sind. Die zu einem Kabel zusammengefassten Leiter bilden einen Leiterstrang.

Zur Verbesserung der elektromagnetischen Verträglichkeit ist es aus dem Stand der Technik bekannt, ein elektrisches Kabel abzuschirmen. Dies geschieht typischerweise mittels eines Schirms aus einem elektrisch leitenden Schirmgeflecht, das einen Leiter oder einen Leiterstrang eines Kabels umhüllt. Ein solches Schirmgeflecht kann beispielsweise aus verzinnten Kupferdrähten gebildet sein.

Der Schirm eines elektrischen Kabels ist wiederum von einem Isoliermaterial umgeben, womit der Schirm nach außen elektrisch isoliert ausgebildet ist. Als Isoliermaterial kommt typischerweise ein zumeist durchsichtig ausgebildeter Kunststoff zum Einsatz.

Die Schirmung insbesondere eines zur elektrischen Verbindung eines Umrichters mit einer elektrischen Maschine vorgesehenen geschirmten elektrischen Kabels verhindert eine direkte Abstrahlung von elektromagnetischen Feldern durch das Kabel oder die Ableitung von induzierten niederfrequenten Rückströmen oder hochfrequenten Gleichtaktströmen zwischen dem Gehäuse des Umrichters und dem Gehäuse der elektrischen Maschine. Hierzu ist der Schirm vorzugsweise sowohl umrichterseitig als auch maschinenseitig zu erden, beispielsweise dadurch, dass der Schirm elektrisch leitend sowohl mit dem Gehäuse des Umrichters als auch mit dem Gehäuse der elektrischen Maschine verbunden wird, wozu jeweils ein Schirmanschlusselement dient.

Ein solches Schirmanschlusselement zeigt beispielsweise die DE 10 2017 127 288 A1. Dieses vorbekannte Schirmanschlusselement verfügt über eine Basis und einen damit zusammenwirkenden Druckschenkel, wobei im endmontierten Zustand ein entflochtener Teilabschnitt des Kabel-Schirmgeflechts zwischen Basis und Druckschenkel angeordnet ist.

Aus der DE 85 10 188 U ist ein Schirmanschlusselement bekannt, das über eine Innenhülse und einer Außenhülse verfügt, wobei der Schirm im endmontierten Zustand randseitig zwischen Innenhülse und Außenhülse angeordnet ist.

Aus der DE 10 2016 205 423 A1 ist ein Schirmanschlusselement bekannt, das als Masseband ausgebildet ist und kabelseitig zwischen einer Leiterisolierung und einem diese Isolierung umgebenden Schirm angeordnet ist, wobei sich das Masseband in Umfangsrichtung nur über einen Teilabschnitt des Kabels erstreckt.

Obgleich sich die aus dem Stand der Technik vorbekannten Schirmanschlusselemente im alltäglichen Praxiseinsatz bewährt haben, besteht Verbesserungsbedarf. Insbesondere ist es angestrebt, eine flexible und vereinfachte Verwendung zu ermöglichen.

Es ist deshalb die **Aufgabe** der Erfindung, ein Schirmanschlusselement der eingangs genannten Art konstruktiv dahingehend weiterzuentwickeln, dass eine vereinfachte und flexible Verwendung ermöglicht ist.

Zur **Lösung** dieser Aufgabe wird mit der Erfindung vorgeschlagen ein Schirmanschlusselement für die Ausbildung einer elektrischen Verbindung zwischen einem Schirmgeflecht eines geschirmten elektrischen Kabels und einem geerdeten Anschlusskontakt einer elektrischen Maschine oder eines Umrichters, das zweiteilig ausgebildet ist und ein kabelseitiges Ringelement einerseits sowie ein anschlusskontaktseitiges Anschlusselement andererseits aufweist, wobei das Ringelement im Durchmesser verstellbar ausgebildet und dazu eingerichtet ist, das geschirmte elektrische Kabel im endmontierten Zustand unter Ausbildung einer quer zur Flächennormale der vom Ringelement umschlossenen Ringelementfläche ausgerichteten Klemmkraft zu umgreifen, wobei das Anschlusselement ein Band aus Schirmgeflecht ist, das zur Anordnung am Ringelement einendseitig eine Schlaufe und zur Anordnung am Anschlusskontakt anderendseitig eine Durchgangsbohrung bereitstellt, wobei die Schlaufe das Ringelement umgreift und dazu eingerichtet ist, im endmontierten Zustand mit einem Schlaufenabschnitt außenseitig des kabelseitigen Schirmgeflechts zwischen elektrischem Kabel und Ringelement am kabelseitigen Schirmgeflecht anzuliegen.

Das erfindungsgemäße Schirmanschlusselement ist zweiteilig ausgebildet. Es verfügt über ein Ringelement sowie über ein Anschlusselement. Im bestimmungsgemäßen Verwendungsfall ist das Anschlusselement elektrisch leitend am Ringelement angeordnet.

Das Ringelement ist kabelseitig ausgebildet. Im endmontierten Zustand steht mithin das Ringelement des erfindungsgemäßen Schirmanschlusselements mit dem elektrischen Kabels in Wirkverbindung. Das Anschlusselement ist anschlusskontaktseitig ausgebildet. Im endmontierten Verwendungsfall steht das Anschlusselement des Schirmanschlusselements mit einem Anschlusskontakt in elektrischer Verbindung, beispielsweise einem Anschlusskontakt einer elektrischen Maschine oder einem Anschlusskontakt eines Umrichters.

Das Ringelement ist im Durchmesser verstellbar ausgebildet. Es ist mithin mit Bezug auf seinen Durchmesser größenvariabel und kann vom Verwender wahlweise auf einen gewünschten Durchmesser eingestellt werden. Das Ringelement des erfindungsgemäßen Schirmanschlusselements eignet sich mithin in vorteilhafterweise für eine Vielzahl von unterschiedlich groß ausgebildeten Kabelquerschnitten. Es kann damit in vorteilhafterweise ein großes Spektrum an Kabeldurchmessern und -varianten abgedeckt werden, beispielsweise Kabelquerschnitte von 16 mm² bis 240 mm². Es ergibt sich so in vorteilhafterweise ein großes und im Vergleich zum Stand der Technik erweitertes Einsatzgebiet.

Das Ringelement ist ferner dazu eingerichtet, das geschirmte elektrische Kabel im endmontierten Zustand unter Ausbildung einer quer zur Flächennormalen der vom Ringelement umschlossenen Ringelementfläche ausgerichteten Klemmkraft zu umgreifen.

Im endmontierten Zustand umgreift das Ringelement das geschirmte elektrische Kabel. Dabei liegt es unter Ausbildung einer Klemmkraft am Kabel an. Die Klemmkraft ist quer zur

Flächennormalen der vom Ringelement umschlossenen Ringelementfläche ausgerichtet, d. h. quer zur axialen Erstreckung des elektrischen Kabels. Da das Ringelement im Durchmesser verstellbar ausgebildet ist, kann die Klemmkraft im bestimmungsgemäßen Verwendungsfall verwenderseitig wahlweise eingestellt werden.

Das Ringelement ermöglicht mit Bezug auf das geschirmte elektrische Kabel eine flexible Verwendung. Es sind in der Querschnittsfläche unterschiedlich große Kabel mit ein und demselben Ringelement gleichermaßen kombinierbar. Darüber hinaus kann die relative Positionierung am Kabel verwenderseitig frei gewählt werden, indem das Ringelement in axialer Richtung des Kabels je nach Anwendungsfall positioniert und alsdann lagesicher fixiert wird. Dabei erfolgt die Lagefixierung in einfacher Weise dadurch, dass das Ringelement in seinem Durchmesser verkleinert wird, womit es am Kabel unter Aufbringen einer Klemmkraft durch Anpressen festgelegt wird.

Das mit dem Ringelement zusammenwirkende Anschlusselement ist als Band ausgebildet. Es besteht aus einem Schirmgeflecht, vorzugsweise aus einem Schirmgeflecht, das identisch zu dem Schirmgeflecht ausgebildet ist, welches den Schirm des geschirmten elektrischen Kabels bildet.

Zur Anordnung des Anschlusselements am Ringelement verfügt das das Anschlusselement bildende Band einendseitig über eine Schlaufe. Anderendseitig stellt das Band eine Durchgangsbohrung bereit, die zur Anordnung an einem Anschlusskontakt dient.

Im endmontierten Zustand umgreift die Schlaufe des Anschlusselements das Ringelement. Hierdurch ist das Anschlusselement mechanisch gegenüber dem Ringelement festgelegt.

Die Schlaufe ist ferner dazu eingerichtet, im endmontierten Zustand mit einem Schlaufenabschnitt außenseitig des kabelseitigen Schirmgeflechts zwischen elektrischem Kabel und Ringelement am kabelseitigen Schirmgeflecht anzuliegen.

Da die Schlaufe des Anschlusskontakts das Ringelement umgreift, kommt im endmontierten Zustand ein Schlaufenabschnitt zwischen dem elektrischen Kabel, d.h. dessen Schirm und dem Ringelement zu liegen. Dabei wird der Schlaufenabschnitt unter Einwirkung der vom Ringelement erzeugten Klemmkraft gegen das geschirmte elektrische Kabel gedrückt und so positionssicher gehalten. Im endmontierten Zustand liegt also der Schlaufenabschnitt außenseitig des kabelseitigen Schirmgeflechts am kabelseitigen Schirmgeflecht an. Sofern der Schirm des elektrischen Kabels von einer Isolierhülle umgeben ist, ist die Isolierhülle verwenderseitig vor einer Montage des erfindungsgemäßen Schirmanschlusselements im Bereich der späteren Kontaktstelle zwischen dem Schlaufenabschnitt und dem Schirmgeflecht aufzutrennen, sodass im endmontierten Zustand eine elektrische Verbindung zwischen dem Schirmgeflecht und dem Anschlusselement in bestimmungsgemäßer Weise ausgebildet ist.

Anderendseitig verfügt das als Band ausgebildete Anschlusselement über eine Durchgangsbohrung. Diese dient dem Anschluss des Anschlusselements an einen geerdeten Anschlusskontakt einer elektrischen Maschine oder eines Umrichters. Dabei kann der Anschlusskontakt beispielsweise nach Art einer Schiene ausgebildet sein, die mit zumindest einem Gewindestift ausgerüstet ist. Im endmontierten Zustand durchgreift dieser Gewindestift die Durchgangsbohrung im Anschlusselement, wobei das Anschlusselement durch eine auf den Gewindestift aufgeschraubte Mutter lagegesichert ist. Im Ergebnis ergibt sich so eine dauerhaft sichere und elektrische Verbindung zwischen dem Anschlusselement und dem Anschlusskontakt.

Das erfindungsgemäße Schirmanschlusselement erweist sich im Ergebnis aus einer Vielzahl von Gründen als vorteilhaft. Es ist eine vereinfachte Montage ermöglicht. Zur Ausbildung einer elektrischen Verbindung zwischen dem geschirmten elektrischen Kabel und einem geerdeten Anschlusskontakt ist lediglich das Ringelement kabelseitig und das Anschlusselement anschlusskontaktseitig anzuordnen und lagezusichern. Dabei ergibt sich in vorteilhafterweise eine niederimpedante elektrische Verbindung zwischen dem Kabelschirm und dem geerdeten Anschlusskontakt.

Das kabelseitige Ringelement des Schirmanschlusselements ist größenvariabel ausgebildet, kann mithin von einem Verwender wahlweise auf eine gewünschte Durchmesserausgestaltung eingestellt werden. Das Ringelement ist mithin für eine Vielzahl von im Durchmesser unterschiedlich groß ausgebildeten elektrischen Kabeln gleichermaßen geeignet, sodass es verwenderseitig nicht erforderlich ist, für unterschiedliche Kabelgrößen unterschiedliche Schirmanschlusselemente bereitzuhalten. Es können vielmehr mit ein und demselben Ringelement unterschiedliche Kabelgrößen gleichermaßen in bestimmungsgemäßer Weise elektrisch mit einem Anschlusskontakt verbunden werden.

Zur Anordnung des Anschlusselements am Ringelement ist das als Band ausgebildete Anschlusselement ringelementseitig lediglich zu einer Schlaufe umzuformen, wobei diese Schlaufe das Ringelement im endmontierten Zustand umgreift. Hierdurch ist eine mechanisch sichere Verbindung zwischen Anschlusselement und Ringelement geschaffen. Ferner sorgt diese Ausgestaltung dafür, dass bei einem bestimmungsgemäß an einem Kabel lagegesicherten Ringelement ein zwischen Ringelement und Kabel befindlicher Schlaufenabschnitt mittels des Ringelements außenseitig gegen den Kabelschirm gepresst wird. Dies sorgt für eine sichere elektrische Verbindung zwischen dem Schirm des elektrischen Kabels und dem Schlaufenabschnitt des Anschlusselements. Zur Ausbildung einer solchen elektrischen Verbindung ist verwenderseitig mithin lediglich eine in dem gewünschten Bereich der elektrischen Verbindung Abisolierung des elektrischen Kabels vorzunehmen, um alsdann den Schlaufenabschnitt mittels des Ringelements in diesem Bereich mit dem Schirm des Kabels elektrisch kontaktieren zu können.

Das Ringelement kann ferner nach dem Baukastenprinzip wahlweise mit unterschiedlich ausgebildeten Anschlusselement kombiniert werden. Nach dem "Baukastenprinzip" im Sinne der Erfindung meint dabei, dass insbesondere nach Breite und Länge unterschiedlich ausgebildete Anschlusselemente vorgesehen sein können, die dann je nach Einbausituation wahlweise Verwendung finden und mit einem Ringelement kombiniert werden können. Auch ist es natürlich möglich, im Bedarfsfall eine Mehrzahl von Anschlusselement vorzusehen, die allesamt mit ein und demselben Ringelement an einem elektrischen Kabel angeordnet werden.

Im Unterschied zum Stand der Technik gestattet es die erfindungsgemäße Ausgestaltung ferner, flexibel eine Mehrzahl von elektrischen Kabeln jeweils mit einer elektrischen Verbindung zwischen dem zugehörigen Kabelschirm und einem gemeinsamen Anschlusskontakt auszubilden. So zeigt nämlich die Praxis, dass anstelle eines Kabels mit einem vergleichsweise großen Kabeldurchmesser ein Kabelstrang mit einer Mehrzahl von im Durchmesser vergleichsweise kleinen Kabeln verwendet wird. Dabei erlaubt die erfindungsgemäße Ausgestaltung einen einfachen Anschluss eines jeden Kabels eines Kabelstrangs an ein und denselben Anschlusskontakt, der beispielsweise nach Art einer Schiene ausgebildet ist und über eine Mehrzahl von Gewindestiften verfügt. Dabei behindern sich im Montagefall die einzelnen Schirmanschlusselemente nicht, was eine einfache Montage bzw. Demontage zusätzlich unterstützt.

Das erfindungsgemäße Schirmanschlusselement kann zur Ausbildung einer elektrischen Verbindung zu einem Anschlusskontakt sowohl maschinenseitig als auch umrichterseitig eingesetzt werden. Dies reduziert im Unterschied zum Stand der Technik die Variantenanzahl, da es nicht mehr erforderlich ist, zwischen einem maschinenseitigen Anschluss und einem umrichterseitigen Anschluss zu unterscheiden. Es kann in diesem Zusammenhang lediglich erforderlich sein, unterschiedlich lang ausgebildete Anschlusselemente vorzusehen, was aber in schon vorbeschriebener Weise dank der Möglichkeit des Baukastenprinzips in einfacher Weise umsetzbar ist. Dabei kann es das "Baukastenprinzip" auch vorsehen, dass unterschiedlich ausgebildete Ringelemente wahlweise eingesetzt werden können, um ein großes Spektrum an möglichen Kabeldurchmessern abzudecken. Die erfindungsgemäße Ausgestaltung ermöglicht aber in jedem Fall eine Variantenreduzierung gegenüber aus dem Stand der Technik vorbekannten Lösungen, was die Vorratshaltung vereinfacht, ebenso wie die verwenderseitige Anwendung vor Ort.

Gemäß einem weiteren Merkmal der Erfindung ist vorgesehen, dass das Ringelement aus einem elektrisch leitenden Material gebildet ist. Dies erbringt den Vorteil, dass das Ringelement im endmontierten Zustand umfangseitig vollflächig im elektrischen Kontakt mit dem Schirm des elektrischen Kabels steht. Die elektrische Verbindung zum Anschlusselement ist hierdurch zusätzlich verbessert. Es steht mithin gemäß dieser Ausführungsform nicht nur der Schlaufenabschnitt in vorbeschriebener Weise im elektrischen Kontakt mit der Schirmung des Kabels, sondern zusätzlich hierzu das gesamte Ringelement. Dabei steht aufgrund der elektrisch leitfähigen Ausgestaltung des Ringelements sowohl das Ringelement als auch der Schirm des elektrischen Kabels mit dem Anschlusselement in elektrischem Kontakt.

Gemäß einem weiteren Merkmal der Erfindung ist vorgesehen, dass das Ringelement im endmontierten Zustand vollumfänglich mit der Schirmung des elektrischen Kabels in elektrisch leitendem Kontakt steht. Das elektrische Kabel ist zu diesem Zweck vollumfänglich abzuisolieren, wobei im Ergebnis ein verbesserter elektrischer Kontakt zum Anschlusselement ausgebildet ist.

Gemäß einem weiteren Merkmal der Erfindung ist vorgesehen, dass das Ringelement eine Schelle mit einem der Durchmesserverstellung dienenden Schneckengewinde ist. Zwecks einer Montage wird die Schelle auf einen Durchmesser eingestellt, der den Kabeldurchmesser überragt. Dies erlaubt in einfacher Weise, das Ringelement über das Kabel zu führen und in axialer Richtung des Kabels an einer wunschgemäßen und zuvor abisolierten Stelle des Kabels zu positionieren. Alsdann ist das Schneckengewinde zur Durchmesserverkleinerung des Ringelements zu betätigen, was mittels herkömmlicher Schraubwerkzeuge, beispielsweise einem Schraubendreher ermöglicht ist. Infolge einer Betätigung des Schneckengewindes wird der von der Schelle bereitgestellte Durchmesser verkleinert, was schlussendlich zur Ausbildung der schon vorbeschriebenen Klemmkraft führt, wobei im endmontierten Zustand unter Einwirkung der Klemmkraft zwischen dem Ringelement und dem Schirm des elektrischen Kabels der vom Abschirmelement bereitgestellte Schlaufenabschnitt eingeklemmt ist. Es ist so einerseits eine sichere elektrische Kontaktierung erreicht sowie andererseits eine dauerhaft sichere Positionierung des Anschlusselements am Schirm des Kabels.

Gemäß einem weiteren Merkmal der Erfindung ist vorgesehen, dass das Band ein Schirmgeflecht aus verzinnten Kupferdrähten aufweist. Das das Anschlusselement bildende Band besteht mithin aus einem Geflecht, das dem Schirmgeflecht des Schirms des Kabels entspricht und aus verzinnten Kupferdrähten gebildet ist. Eine sichere und korrosionsfreie elektrische Verbindung ist so zusätzlich unterstützt.

Gemäß einem weiteren Merkmal der Erfindung ist vorgesehen, dass das Band anschlusskontaktseitig mit einer eine Durchgangsbohrung bereitstellenden Kappe ausgerüstet ist. Diese Kappe dient insbesondere dazu, ein endseitig ungewolltes Ausfransen des aus einem Schirmgeflecht gebildeten Bandes zu vermeiden. Dabei stellt die Kappe eine Durchgangsbohrung bereit, sodass in schon vorbeschriebener Weise unter Verwendung eines Gewindebolzens eine mechanische Anbindung des Anschlusselements an einen geerdeten Anschlusskontakt stattfinden kann.

Gemäß einem weiteren Merkmal der Erfindung ist vorgesehen, dass das Band ringelementseitig ein Verschlussteil trägt, das unter Ausbildung einer bandseitigen Schlaufe mit einem vom Band bereitgestellten Gegenstück zusammenwirkt. Zur bestimmungsgemäßen Anordnung des Anschlusselements am Ringelement ist das Anschlusselement ringelementseitig mit einer Schlaufe ausgerüstet. Zur Ausbildung dieser Schlaufe wird das als Band ausgebildete Anschlusselement ringelementseitig umgelegt und in axialer Bandrichtung über einen gewissen Längenabschnitt doppelt geführt, wodurch sich die Schlaufe ergibt. Für eine dauerhaft sichere Ausbildung der Schlaufe, verfügt das Band ringelementseitig über ein Verschlussteil, das mit einem vom Band bereitgestellten Gegenstück zusammenwirkt. Im endmontierten Zustand greift das Verschlussteil in das Gegenstück unter Ausbildung der schon vorbeschriebenen Schlaufe ein. Dabei sind das Verschlussteil und das Gegenstück vorzugsweise lösbar miteinander verbunden, was einerseits eine vereinfachte Montage ermöglicht sowie andererseits eine zerstörungsfreie Demontage gewährleistet.

Für eine bestimmungsgemäße Anordnung des Anschlusselements am Ringelement, ist das Anschlusselement mit seinem ringelementseitigen Verschlussstück um das Ringelement herum zu führen, sodass es alsdann unter Ausbildung einer Schlaufe mit dem bandseitigen Gegenstück lösbar verbunden werden kann.

Gemäß einem weiteren Merkmal der Erfindung verfügt das Schirmanschlusselement über ein zweites Anschlusselement. Es können auch drei oder vier Anschlusselemente vorgesehen sein. Dabei sind alle Anschlusselemente mit ein und demselben Ringelement kombiniert, können aber anschlusskontaktseitig an unterschiedliche Anschlusskontakte angeschlossen sein. Eine solche Aufrüstung ermöglichen die aus dem Stand der Technik vorbekannten Konstruktionen nicht.

Mit der Erfindung wird des Weiteren vorgeschlagen ein elektrisches Kabel, insbesondere ein elektrisches Kabel zur Verbindung eines Umrichters mit einer elektrischen Maschine, wobei das elektrische Kabel ausgerüstet ist mit einem Schirmanschlusselement der erfindungsgemäßen Art.

Im Montagefall wird das elektrische Kabel einendseitig bzw. anderendseitig in an sich bekannter Weise an eine elektrische Maschine, beispielsweise einen Elektromotor, und an einen Umrichter, beispielsweise einen Frequenzumrichter, angeschlossen und lagesicher fixiert. Dabei dient im Unterschied zum Stand der Technik diese Lagefixierung aber nicht dazu, den Schirm des Kabels elektrisch mit dem Erdpotenzial zu verbinden. Hierzu dient vielmehr ein erfindungsgemäßes Schirmanschlusselement in schon vorbeschriebener Weise, wobei maschinenseitig sowie umrichterseitig jeweils ein Schirmanschlusselement vorgesehen ist. Die erfindungsgemäßen Schirmanschlusselemente dienen mithin nicht einer mechanisch sicheren Anordnung des Kabels am Umrichter bzw. an der elektrischen Maschine. Die Schirmanschlusselemente sind von einer solch mechanischen Sicherung vielmehr unabhängig und dienen ausschließlich einer bestimmungsgemäßen elektrischen Kontaktierung des Kabelschirms an einem geerdeten Anschlusskontakt, d. h. an das Erdpotenzial. Eine niederimpedante Verbindung ist so in vorteilhafter Weise sichergestellt.

Gemäß einem weiteren Merkmal der Erfindung ist vorgesehen, dass das elektrische Kabel über zwei Schirmanschlusselemente der erfindungsgemäßen Art verfügt, wobei das erste Schirmanschlusselement umrichterseitig und das zweite Schirmanschlusselement maschinenseitig am Kabel angeordnet ist. Dabei verfügen die beiden Schirmanschlusselemente in identischer Weise über ein Ringelement einerseits und über ein Anschlusselement andererseits, was in schon vorbeschriebener Weise im Unterschied zum Stand der Technik die Variantenvielfalt in vorteilhafter Weise reduziert.

Weitere Merkmale und Vorteile der Erfindung ergeben sich aus der nachfolgenden Beschreibung anhand der Figuren. Dabei zeigen
- Fig. 1: in schematisch perspektivischer Ansicht ein erfindungsgemäßes Schirmanschlusselement sowie
- Fig. 2: in schematischer Darstellung eine bestimmungsgemäße Verwendung eines erfindungsgemäßen Schirmanschlusselements.

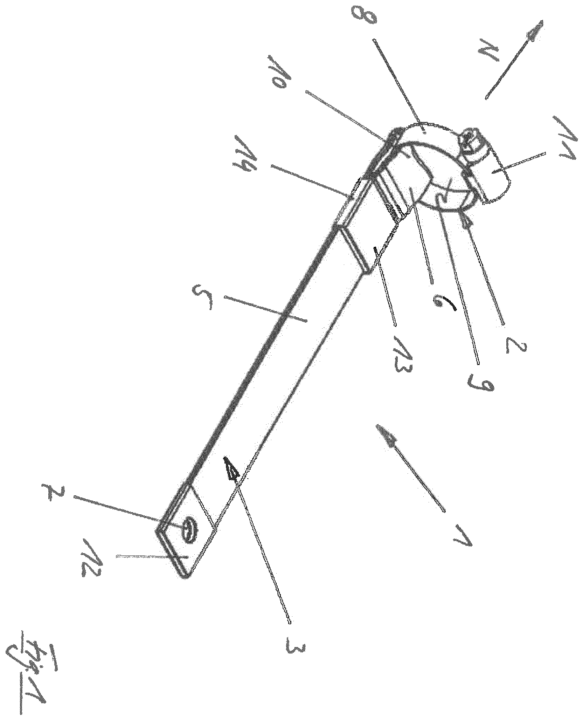

Fig. 1 lässt in schematisch perspektivischer Darstellung ein erfindungsgemäßes Schirmanschlusselement 1 erkennen. Dieses ist zweiteilig ausgebildet und verfügt über ein Ringelement 2 einerseits und ein Anschlusselement 3 andererseits.

Das Ringelement 2 ist im gezeigten Ausführungsbeispiel als Schelle 8 ausgebildet und im Durchmesser größenvariabel einstellbar. Hierzu dient ein Schneckengewinde 11, das mittels eines herkömmlichen Schraubendrehers bertreibbar ist. Dabei kann je nach Drehrichtung des Schraubendrehers der von der Schelle 8 bereitgestellte Durchmesser verkleinert oder vergrößert werden.

Im endmontierten Zustand liegt die Schelle 8 mit ihrer Innenoberfläche 9 außenseitig eines in diesem Bereich abisolierten Schirms eines elektrischen Kabels an. Dabei erzeugt die Schelle 8 eine auf das Kabel einwirkende Klemmkraft, die quer zur Flächennormalen N der vom Ringelement 2 umschlossenen Ringelementfläche, d. h. radial zu einem vom Ringelement 2 aufgenommenen Kabel ausgerichtet ist.

Das Anschlusselement 3 ist im dargestellten Ausführungsbeispiel als Band 5 aus einem Schirmgeflecht gebildet. Es ist ringelementseitig zu einer Schlaufe 6 umgelegt, die das Ringelement 2 umgreift. Im endmontierten Zustand liegt die Schlaufe 6 mit einem dem Kabel zugewandten Schlaufenabschnitt 10 außenseitig des kabelseitigen Schirmgeflechts zwischen elektrischem Kabel und Ringelement 2 am kabelseitigen Schirmgeflecht an.

Für eine dauerhaft sichere Ausgestaltung der Schlaufe 6 dient ein Verschlussteil 13, das einendseitig des Bandes 5 ausgebildet ist. Im endmontierten Zustand wirkt dieses Verschlussteil 13 mit einem ebenfalls vom Band 5 bereitgestellten Gegenstück 14 zusammen, wie sich dies aus der Darstellung nach Fig. 1 ergibt. Dabei sind das Verschlussteil 13 und das Gegenstück 14 lösbar miteinander verbunden, was eine Demontage ermöglicht.

Ringelemententfernt trägt das Band 5 eine Kappe 12, die insbesondere dazu dient, ein ungewolltes Ausfransen des aus Schirmgeflecht gebildeten Bandes 5 zu vermeiden.

Kappenseitig ist das Band 5 mit einer Durchgangsbohrung 7 ausgerüstet, die eine Anordnung des Anschlusselements 3 an einem Anschlusskontakt beispielsweise eines Umrichters oder einer elektrischen Maschine gestattet.

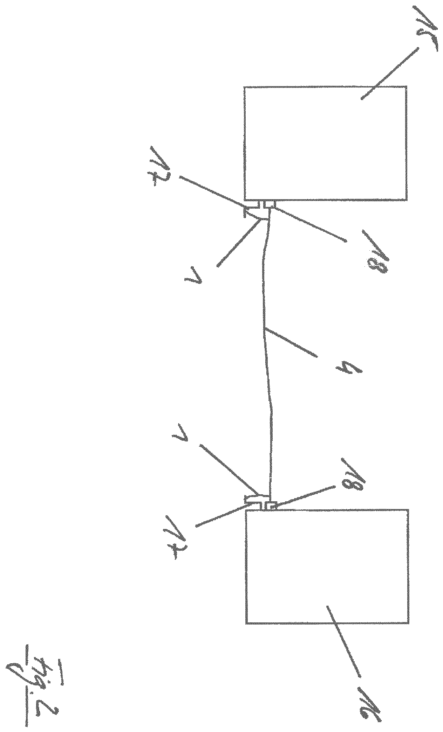

Fig. 2 lässt in rein schematischer Darstellung eine mögliche Anwendung für das erfindungsgemäße Schirmanschlusselement 1 erkennen.

Es sind in Fig. 2 beispielhaft ein Umrichter 15 sowie eine elektrische Maschine 16 dargestellt. Diese stehen mittels eines elektrischen Kabels 4 in elektrischer Verbindung, wobei sowohl umrichterseitig als auch maschinenseitig entsprechende Kabelanschlüsse 18 vorgesehen sind. Das elektrische Kabel 4 verfügt in an sich bekannter Weise über einen Schirm.

Zur Erdung des Schirms des Kabels 4 kommt sowohl umrichterseitig als auch maschinenseitig jeweils ein Schirmanschlusselement 1 nach der Erfindung zum Einsatz.

Dabei ist ein jedes Schirmanschlusselement 1 kabelseitig mittels des dafür vorgesehenen Ringelements am Kabel 4 angeordnet, wobei eine elektrische Verbindung zwischen dem Schirm des Kabels 4 und dem Ringelement 2 ausgebildet ist. Anderendseitig ist das Schirmanschlusselement 1 an einen geerdeten Anschlusskontakt 17 angeschlossen. Hierzu dient das schon vorbeschriebene Anschlusselement 3, das einendseitig am Ringelement 2 und anderendseitig am Anschlusskontakt 17 angeordnet ist.

### Bezugszeichen

- 1: Schirmanschlusselement
- 2: Ringelement
- 3: Anschlusselement
- 4: Elektrisches Kabel
- 5: Band
- 6: Schlaufe
- 7: Durchgangsbohrung
- 8: Schelle
- 9: Innenoberfläche
- 10: Schlaufenabschnitt
- 11: Schneckengewinde
- 12: Kappe
- 13: Verschlussteil
- 14: Gegenstück
- 15: Umrichter
- 16: Elektrische Maschine
- 17: Anschlusskontakt
- 18: Kabelanschluss
- N: Flächennormale

## Patentansprüche

1. Schirmanschlusselement für die Ausbildung einer elektrischen Verbindung zwischen einem Schirmgeflecht eines geschirmten elektrischen Kabels und einem geerdeten Anschlusskontakt einer elektrischen Maschine oder eines Umrichters, das zweiteilig ausgebildet ist und ein kabelseitiges Ringelement (2) einerseits sowie ein anschlusskontaktseitiges Anschlusselement (3) andererseits aufweist, wobei das Ringelement (2) im Durchmesser verstellbar ausgebildet und dazu eingerichtet ist, das geschirmte elektrische Kabel (4) im endmontierten Zustand unter Ausbildung einer quer zur Flächennormalen der vom Ringelement (2) umschlossenen Ringelementfläche ausgerichteten Klemmkraft zu umgreifen, wobei das Anschlusselement (3) ein Band (5) aus Schirmgeflecht ist, das zur Anordnung am Ringelement (2) einendseitig eine Schlaufe (6) und zur Anordnung am Anschlusskontakt (17) anderendseitig eine Durchgangsbohrung (7) bereitstellt, wobei die Schlaufe (6) das Ringelement (2) umgreift und dazu eingerichtet ist, im endmontierten Zustand mit einem Schlaufenabschnitt (10) außenseitig des kabelseitigen Schirmgeflechts zwischen elektrischem Kabel (4) und Ringelement (2) am kabelseitigen Schirmgeflecht anzuliegen.

2. Schirmanschlusselement nach Anspruch 1, **dadurch gekennzeichnet, dass** das Ringelement (2) aus einem elektrisch leitenden Material gebildet ist.

3. Schirmanschlusselement nach Anspruch 1 oder 2, **dadurch gekennzeichnet, dass** das Ringelement (2) im endmontierten Zustand vollumfänglich mit dem Schirm des elektrischen Kabels (4) in elektrisch leitendem Kontakt steht.

4. Schirmanschlusselement nach einem der vorhergehenden Ansprüche, **dadurch gekennzeichnet, dass** das Ringelement (2) eine Schelle (8) mit einem der Durchmesserverstellung dienenden Schneckengewinde (11) ist.

5. Schirmanschlusselement nach einem der vorhergehenden Ansprüche, **dadurch gekennzeichnet, dass** das Band (5) ein Schirmgeflecht aus verzinnten Kupferdrähten aufweist.

6. Schirmanschlusselement nach einem der vorhergehenden Ansprüche, **dadurch gekennzeichnet, dass** das Band (5) anschlusskontaktseitig mit einer eine Durchgangsbohrung (7) bereitstellenden Kappe (12) ausgerüstet ist.

7. Schirmanschlusselement nach einem der vorhergehenden Ansprüche, **dadurch gekennzeichnet, dass** das Band (5) ringelementseitig ein Verschlussteil (13) trägt, das unter Ausbildung einer bandseitigen Schlaufe (6) mit einem vom Band (5) bereitgestellten Gegenstück (14) zusammenwirkt.

8. Schirmanschlusselement nach einem der vorhergehenden Ansprüche, **gekennzeichnet durch** ein zweites Anschlusselement (3).

9. Elektrisches Kabel, insbesondere zur Verbindung eines Umrichters mit einer elektrischen Maschine, ausgerüstet mit einem Schirmanschlusselement (1) nach einem der vorhergehenden Ansprüche 1 bis 8.

10. Elektrisches Kabel nach Anspruch 9, mit einem zweiten Schirmanschlusselement (1) nach einem der vorhergehenden Ansprüche 1 bis 8, wobei das erste Schirmanschlusselement (1) umrichterseitig und das zweite Schirmanschlusselement (1) maschinenseitig am Kabel (4) angeordnet ist.
